# EUROPÄISCHE PATENTSCHRIFT

(11) **EP 4 259 386 B1**
(45) Veröffentlichungstag und Bekanntmachung des Hinweises auf die Patenterteilung: **27.11.2024**
(21) Anmeldenummer: 21836421.4
(22) Anmeldetag: 09.12.2021
(51) Int. Cl.: B25J 9/00, B65H 83/00, D06H 7/00, B65H 5/12, B25J 15/06, B65H 5/14, D06H 7/24

(54) **ABNAHMEVORRICHTUNG ZUM AUTOMATISIERTEN ABNEHMEN VON FLEXIBLEN MATERIALTEILEN, EIN VERFAHREN ZUM ABNEHMEN VON FLEXIBLEN MATERIALTEILEN UND EINE PRODUKTIONSANLAGE MIT EINER FÖRDEREINRICHTUNG UND EINER ABNAHMEVORRICHTUNG**
REMOVAL DEVICE FOR AUTOMATICALLY REMOVING FLEXIBLE MATERIAL PARTS, METHOD FOR REMOVING FLEXIBLE MATERIAL PARTS, AND PRODUCTION SYSTEM COMPRISING A CONVEYOR DEVICE AND A REMOVAL DEVICE
DISPOSITIF DE RETRAIT POUR LE RETRAIT AUTOMATIQUE DE PIÈCES DE MATÉRIAU SOUPLES, PROCÉDÉ POUR RETIRER DES PIÈCES DE MATÉRIAU SOUPLES, ET INSTALLATION DE PRODUCTION COMPRENANT UN DISPOSITIF DE TRANSPORT ET UN DISPOSITIF DE RETRAIT

(30) Priorität: 09.12.2020 DE 102020132849
(43) Veröffentlichungstag der Anmeldung: 18.10.2023
(73) Patentinhaber: HEFA HOLDING GMBH, 63150 Heusenstamm (DE)
(72) Erfinder: HELD, Gunnar, 63150 Heusenstamm (DE)
(74) Vertreter: Ter Meer Steinmeister & Partner
(86) Internationale Anmeldenummer: PCT/EP2021/085025
(87) Internationale Veröffentlichungsnummer: WO 2022/122936

(56) Entgegenhaltungen:
- WO-A1-2018/153829
- DE-A1- 102006 060 361
- DE-U1- 202007 000 899
- DE-U1- 202007 006 528

## Beschreibung

Die Erfindung betrifft eine Abnahmevorrichtung zum Abnehmen von flexiblen Materialteilen, ein Verfahren zum Abnehmen von flexiblen Materialteilen und eine Produktionsanlage mit einer Fördereinrichtung und einer Abnahmevorrichtung.

Flexible Materialteile oder Gewebematerialteile, beispielsweise technische Textilien, Stoffe, faserverstärkte Gewebe, Fließteile und OPW-Gewebe (one-piece woven) werden auf Fördereinrichtungen transportiert. Eine derartige Fördereinrichtung ist in der Lage, Materialbahnen auf einer horizontalen Fläche zu fördern. Die breiten Materialbahnen werden liegend auf der Fördereinrichtung von einer Bearbeitungseinheit, bspw. einer Schneidvorrichtung bearbeitet bzw. geschnitten. Meist erfolgt das Schneiden derartiger Materialteile mittels Lasertechnologie. Hierbei kann ein kontinuierliches und/oder auch ein diskontinuierliches Schneid- und Förderverfahren angewendet werden. Aus einer Materialbahn werden üblicherweise mehrere Materialteile in nebeneinander verlaufenden Bahnen geschnitten und die Materialteile sind dabei so angeordnet, dass sie zueinander versetzt sind, sogenanntes Nesting, um eine möglichst hohe Ausbeute von fertiggeschnittenen Materialteilen aus einem Materialband zu erhalten.

Häufig werden mehrere Materialteile nebeneinander aus einer Bahn geschnitten, sodass nach Beendigung des Schneidvorgangs mehrere Materialteile am Ende der Fördereinrichtung ankommen und dort meist zeitgleich bzw. beinahe zeitgleich abgenommen werden müssen. Das Nesting der Materialteile kann aber auch dazu führen, dass die fertig geschnittenen Materialteile versetzt am Ende der Fördereinrichtung oder an einer Abnahmeposition der Fördereinrichtung ankommen.

Bisher werden bei derartigen Anlagen die geschnittenen Materialteile und insbesondere OPW-Gewebeteile, die für Airbags verwendet werden, per Hand von der Fördereinrichtung der Produktionsanlage entfernt. Ein Nachteil der manuellen Abnahme ist die personalaufwendige und eintönige Handhabung der geschnittenen Materialteile, insbesondere der geschnittenen OPW-Gewebematerialteile. Eine solche Anlage gemäß dem Stand der Technik ist in Dokument DE202007006528U1 offenbart. DE 20 2007 000 899 U1 zeigt eine Handhabungseinrichtung für flexible mattenartige Materialstücke mit einem Handlingswerkzeug und einem drehend angetriebenen Wi-ckelträger, zum Aufwickeln eines Wickels, der an einem Gestell befestigt ist. Das Gestell kann von einem Manipulator mehrachsig im Raum bewegt werden und insbe-sondere von einer Roboterhand mehrachsig gedreht und geschwenkt werden. Sobald der Wickel fertig ist, transportiert der Manipulator diesen zur Abgabestelle, z.B. zu einem Ablagetisch, wo das Materialstück wieder abgewickelt und abgegeben wird.
DE 10 2017 203 124 A1 zeigt einen Robotergreifer zum Handhaben von biegeschlaf-fen, flächigen Materialzuschnitten. Zum Ablegen werden die flächigen Materialbahn-zuschnitte von einer Mantelwand einer Materialaufnahmerolle abgerollt, um diese ab-gewickelt auf einer Ablagefläche abzulegen.

Bei der Airbagproduktion weisen die Gewebematerialteile häufig sehr große Abmessungen auf und können ggf. bis zu 4m lang sein, da die Airbags über eine gesamte Fahrzeuginnenraumlänge reichen. Ein Abnehmen und Ablegen derart großer Gewebematerialteile ist nicht nur aufwendig, sondern erfordert auch große Bewegungsräume und entsprechend große Lageplätze.

Außerdem tritt bei der Handhabung von flexiblen Materialteilen und insbesondere bei OPW-Gewebematerialteilen aufgrund der großen Abmessungen ein sogenannter "Segeleffekt" auf, da derartige Materialen meist nicht nur wenig luftdurchlässig sind und beim Wegbewegen ein "Segeleffekt" entsteht, der ein wiederholbares Ablegen an vorgesehenen Ablagepositionen erschwert bzw. ein zügiges Arbeiten verlangsamt.

Eine weitere Anforderung neben dem effektiven Abnehmen der geschnittenen Materialteile auch bei hoher Fördergeschwindigkeit ist die beschädigungsfreie Handhabung des Materials oder des Gewebes und ein sicheres Abnehmen von der Fördereinrichtung, da die geschnittenen Materialteile aus biegeschlaffen Materialien oder Geweben bestehen und daher ein automatisches Greifen bzw. Abnehmen erschwert ist.

Weiter ist es notwendig, eine Abnahmevorrichtung an sich verändernde Schnittmuster und veränderte Dimensionen der zu fertigenden Materialteile anzupassen, da in derartigen Anlagen verschiedene Losgrößen von Materialteilen geschnitten werden und die Abnahmevorrichtung flexibel für verschiedene Arten von Materialien oder Gewebe als auch für verschiedene Größen der Materialteile einsetzbar sein muss.

Daher ergibt sich die Aufgabe, eine Abnahmevorrichtung zum Abnehmen und Bewegen von einem oder mehreren flexiblen Materialteilen anzugeben, als auch ein Verfahren zum Abnehmen von Materialteilen von einer Fördereinrichtung und eine Produktionsanlage mit einer Fördereinrichtung und einer Abnahmevorrichtung bereitzustellen.

Die vorliegende Erfindung ist daher auf alle biegeschlaffen bzw. flexiblen Materialien gerichtet bzw. sind diese Materialien von der erfindungsgemäßen Abnahmevorrichtung handhabbar. Verschiedene Beispiele für mögliche Materialien werden im Folgenden angegeben. Weitestgehend wird die Erfindung jedoch anhand von biegeschlaffen OPW-Geweben beschrieben.

Die Erfindung basiert auf der grundlegenden Idee, der Förderrichtung nachgeschaltet oder nachgeordnet eine Vorrichtung zu platzieren, die wenigstens ein Materialteil oder mehrere Materialteile abnehmen kann und wenigstens ein Materialteil so von der Förderrichtung wegbewegen kann, dass der erforderliche Platzbedarf zum Bewegen reduziert wird. Dazu wird erfindungsgemäß vorgeschlagen, dass wenigstens ein auf der Fördereinrichtung ankommendes Materialteil aufgewickelt wird und in einem aufgewickelten Zustand weiterbefördert wird und ggf. in einem aufgewickelten Zustand in vorbereiteten Behältern abgelegt wird. Durch den Einsatz von mehreren Aufwickelvorrichtungen bzw. dem zeitlich versetzten Einsatz einer einzigen Aufwickelvorrichtung für benachbarte Materialbahnen lassen sich auch Materialteile bei einer mehrspurigen Zuführung von Materialteilen handhaben.

Gemäß einem Aspekt wird eine Abnahmevorrichtung zur Abnahme von wenigstens einem biegeschlaffen Materialteil von einer Fördereinrichtung angegeben, umfassend: wenigstens eine Aufwickelvorrichtung mit einem Aufnehmer, der zu einer Abnahmeposition A über der Fördereinrichtung verfahrbar ist und eingerichtet ist, einen Bereich eines abzunehmenden Materialteils von der Fördereinrichtung aufzunehmen und um den Aufnehmer aufzuwickeln, wobei die Aufwickelvorrichtung nach einem Aufwickeln des abzunehmenden Materialteils in seiner Ausrichtung verschwenkbar ist und zu einer Ablageposition verfahrbar ist, wobei die Aufwickelvorrichtung eingerichtet ist, das um den Aufnehmer gewickelte Materialteil zu einem Transportbehälter an die Ablageposition zu befördern und das aufgewickelte Materialteil in einem aufgewickelten Zustand abzulegen.

Vorzugsweise kann der Aufnehmer das abzunehmende Materialteil in einer im Wesentlichen horizontalen Längsausrichtung des Aufnehmers kontaktieren.

Vorzugsweise können mehrere Aufwickelvorrichtungen angeordnet sein, wobei jede Aufwickelvorrichtung einem Bereich der Fördereinrichtung zugeordnet ist. Dadurch lassen sich mehrere Materialteile gleichzeitig bzw. quasi-parallel oder unabhängig voneinander abnehmen und ablegen.

Die Aufwickelvorrichtung kann bspw. als Tripod, Hexapod oder Parallelkinematik Roboter oder Knickarmroboter ausgebildet sein. Einfachstenfalls umfasst die Aufwickelvorrichtung drei Achsen in X, Y und Z-Richtung, an denen der Aufnehmer verfahrbar ist, wobei die X-Richtung der Förderrichtung der Materialteile entspricht, die Y-Richtung quer zur Förderrichtung verläuft und die Z-Richtung der vertikalen Ausrichtung entspricht.

Die Aufwickelvorrichtung kann mit dem Aufnehmer mittels eines Gelenks gekoppelt sein, um die Ausrichtung des Aufnehmers abhängig vom Aufnahmevorgang oder Ablagevorgang zu verändern.

Bevorzugt kann die Aufwickelvorrichtung in der Höhe zur Fördereinrichtung beweglich sein und/oder von einer Abnahmeposition zu einer Ablageposition beweglich oder verfahrbar sein. Somit lässt sich das eine oder die mehreren Materialteile von der Fördereinrichtung abnehmen und an einer anderen Stelle ablegen. Erfindungsgemäß erfolgt der Transport in einem aufgewickelten Zustand, sodass die Handhabung der teilweise sehr großen Materialteile und auch der Platzbedarf für den Transport erheblich reduziert wird.

Vorzugsweise kann der Aufnehmer eine Greifeinrichtung aufweisen, mit der ein auf der Fördereinrichtung ankommendes Materialteil an einer Oberfläche des Aufnehmers angehaftet oder fixiert wird, um diese aufzuwickeln.

Außerdem oder alternativ kann der Aufnehmer eine Saugvorrichtung umfassen, um ein auf der Fördereinrichtung ankommendes Materialteil an einer Oberfläche des Aufnehmers anzuhaften. Dadurch wird das Materialteil von der Fördereinrichtung aufgenommen und ein Aufwickeln um den Aufnehmer ermöglicht.

Der Aufnehmer kann auch als Aufnahmevorrichtung oder Abnahmeelement bezeichnet werden.

Vorzugsweise ist der Aufnehmer drehbar an der Aufwickelvorrichtung angelenkt. Dadurch kann das aufzunehmende Materialteil vorzugsweise nach dem Anhaften am Aufnehmer eine Drehbewegung um die Längsachse ausführen, um somit das Materialteil um den Aufnehmer herum aufzuwickeln.

Der Aufnehmer kann als zylindrischer Körper ausgebildet sein, der vorzugsweise eine Breite bzw. Längsausdehnung aufweist, die wenigstens der Breite eines Materialteils entspricht.

Bevorzugt kann die Saugvorrichtung eine oder mehrere Öffnungen aufweisen, die an der Oberfläche des Aufnehmers angeordnet sind.

Die eine oder mehreren Öffnungen können auch als Fugen oder Reihen von Öffnungen an der Oberfläche des Aufnehmers verteilt sein. Die eine oder mehreren Öffnungen können sowohl in Richtung der Längsachse als auch in Umfangsrichtung verteilt sein, um somit jederzeit eine Saugwirkung zu erzeugen und ein Aufnehmen eines Materialteils zu ermöglichen. Dadurch ergibt sich der Vorteil, dass eine größere Fläche des Gewebematerialteils angesaugt werden kann und dadurch besser an dem Aufnehmer angehaftet wird. Weiter kann der Aufnehmer das Gewebematerialteil unabhängig davon, in welche Richtung sie rotiert, ansaugen und das Gewebematerialteil dadurch anziehen.

Um eine effektive Anhaftung zu gewährleisten, kann die eine oder können die mehreren Öffnungen mit Unterdruck beaufschlagt werden. Somit lässt sich ein ankommendes Materialteil zuverlässig an der Oberfläche des Aufnehmers anhaften.

Die Oberfläche des Aufnehmers kann eine Struktur aufweisen, die ein Anhaften ermöglicht, bspw. eine gummierte Oberfläche mit Mikrostrukturen.

Um ein effektives Lösen eines auf den Aufnehmer aufgewickelten Materialteils zu ermöglichen, können die eine oder die mehreren Öffnungen auch mit einem Überdruck beaufschlagt werden. Somit ist es möglich, zum Ablegen oder Lösen des aufgewickelten Materialteils von dem Aufnehmer durch den Überdruck ein Ablegen zu erleichtern.

Zum Ablegen der Gewebematerialteile in der Transportbox wird die Saugvorrichtung mit Druck beaufschlagt, um ein Lösen der Gewebematerialteile vom Aufnehmer zu bewirken.

Die Saugvorrichtung des Aufnehmers kann als Reihe von Öffnungen ausgebildet sein. Es können auch mehrere Öffnungen oder Reihen von Öffnungen verteilt über den Umfang des Aufnehmers ausgebildet sein, um ein Ansaugen bzw. Anhaften des Gewebematerialteils möglichst an jeder Rotationsposition des Aufnehmers sicherzustellen.

Die Greifvorrichtung kann als Spalt zwischen der Oberfläche des Aufnehmers und der Greifvorrichtung ausgebildet sein, wobei ein auf der Fördereinrichtung ankommendes Materialteil in den Spalt einführbar ist. Die Greifvorrichtung kann als Bügel oder Klappe am Aufnehmer ausgebildet sein, wobei der Spalt nach dem Einführen des Materialteils verkleinert werden kann, um ein Einklemmen zu bewirken. Danach kann dann der Aufnehmer mittels einer Drehbewegung das Materialteil aufwickeln.

Die Aufwickelvorrichtung kann auch eine Klemmvorrichtung aufweisen, die das aufgewickelte Materialteil an dem Aufnehmer befestigt. D.h., nach dem das Materialteil auf den Aufnehmer aufgewickelt ist, klappt die Klemmvorrichtung auf das aufgewickelte Materialteil und verhindert somit ein nicht beabsichtigtes Abrollen.

Die Klemmvorrichtung kann dabei an dem Aufnehmer oder an einer Halterung des Aufnehmers oder an der Aufwickelvorrichtung befestigt sein und nach einem Aufwickelvorgang in Richtung Aufnehmer bewegbar sein, um das aufgewickelte Materialteil am Aufnehmer festzulegen.

Bei einem Ablagevorgang kann die Klemmvorrichtung vom Aufnehmer mit dem aufgewickelten Materialteil hinwegbewegbar sein, um das aufgewickelte Materialteil freizugeben.

Vorzugsweise ist eine Rotationsachse des Aufnehmers im Bereich der Abnahmeposition des Materialteils von der Fördereinrichtung im Wesentlichen horizontal oder leicht geneigt und im Wesentlichen quer oder rechtwinklig zu einer Förderrichtung der Fördereinrichtung ausgerichtet.

Vorzugsweise ist eine Rotationsachse des Aufnehmers im Bereich der Ablageposition horizontal oder vertikal ausgerichtet. Die Rotationsachse des Aufnehmers kann je nachdem an welcher Position das aufgewickelte Materialteil abgelegt wird bzw. eine Ablagebox angeordnet ist, verschwenkt werden, um das aufgewickelte Materialteil abzulegen.

Der Aufnehmer kann nach einem Anhaften des Materialteils an dem Aufnehmer von einer Förderebene nach oben verfahren werden.

Dadurch kann dann der Aufwickelvorgang des Aufnehmers in einem vorbestimmten Abstand zur Förderebene stattfinden. Dies erleichtert den Aufwickelprozess.

Vorzugsweise kann der Aufnehmer nach dem Aufwickeln des Materialteils mit dem aufgewickelten Materialteil zum Transportbehälter verfahren werden, um das aufgewickelte Materialteil dort im aufgewickelten Zustand abzulegen.

Die Aufwickelvorrichtung kann wenigstens ein Gelenk aufweisen, das ein Positionieren und Verschwenken des Aufnehmers ermöglicht.

Die Aufwickelvorrichtung kann in ihre Höhe verstellbar sein, um von der Förderebene oder von der Abnahmeposition A angehoben zu werden und nach einem Verschwenken auf die Höhe eines Transportbehälters oder einer Ablageposition verfahren zu werden.

Die Abnahmevorrichtung kann weiter ein Gestell aufweisen, an dem eine oder mehrere Aufwickelvorrichtungen befestigt sind, wobei das Gestell breiter als eine Breite der Fördereinrichtung ist.

Vorzugsweise kann das Materialteil flexibel und/oder biegeschlaff sein.

Es kann auch einlagig oder mehrlagig sein.

Vorzugsweise ist das Materialteil ein Airbag- oder OPW-Gewebe oder ein technisches Textil, ein Stoff, ein faserverstärktes Gewebe, ein Vliesmaterial, ein Kohlefasermaterial, Papier, Glasfasermaterial oder ein Sitzbezugsmaterial.

Vorzugsweise kann das Materialteil beschichtete oder unbeschichtete, ein- oder mehrlagige Metall- oder Kunststofffolien umfassen.

Ein erfindungsgemäßes Abnahmesystem kann einen Transportbehälter umfassen, der wenigstens ein aufgewickeltes Materialteil aufnehmen kann und der im Bereich der Ablageposition positioniert ist, um das aufgewickelte Gewebematerialteil von dem Aufnehmer aufzunehmen.

Der Transportbehälter kann eine Partitionierungsstruktur aufweisen, wobei in den durch die Partitionierungsstruktur gebildeten Ablagebereichen jeweils ein aufgewickeltes Materialteil aufgenommen wird.

Der Transportbehälter kann mehrere Ablagebereiche aufweisen, wobei jeder Ablagebereich eine Tiefe aufweist, die größer als der Durchmesser oder die Weite des Ablagebereichs ist.

Vorzugsweise entspricht die Tiefe des Ablagebereichs wenigstens der Breite eines Materialteils. Es ist aber auch möglich, dass das aufgewickelte Materialteil aus dem Ablagebereich herausragt. Vorzugsweise sollte die Tiefe des Ablagebereichs größer sein, als die Hälfte der Breite eines Materialteils.

Das Abnahmesystem kann weiter ein Förderband aufweisen, auf dem ein oder mehrere Transportbehälter zur Ablageposition transportierbar sind und nach einem Befüllen mit einem oder mehreren aufgewickelten Gewebematerialteilen von der Ablageposition hinweg transportierbar sind.

In einer besonderen Ausgestaltung kann die Förderrichtung des Förderbandes im Bereich der Ablageposition quer zur Förderrichtung der Fördereinrichtung verlaufen und/oder die Anlageposition kann rechts und/oder links bzw. seitlich zur Fördereinrichtung angeordnet sein.

Es wird auch ein System zum Abtransportieren von Gewebematerialteilen angegeben, umfassend: eine Fördereinrichtung mit einer horizontal angeordneten Förderebene, auf der wenigstens ein Gewebematerialteil gefördert wird und mit einer oben beschriebenen Abnahmevorrichtung.

Die Förderung der Materialteile kann dabei kontinuierlich als auch diskontinuierlich erfolgen. D.h. die Materialteile können mit der erfindungsgemäßen Abnahmevorrichtung von der Fördereinrichtung sowohl aus der Förderbewegung heraus aufgenommen und aufgewickelt werden, als auch beim Stop and Go Betrieb der Fördereinrichtung aus einer Ruheposition.

Weiter wird eine Anlage zum Schneiden und Transportieren von Gewebematerialteilen angegeben, umfassend: ein Abnahmesystem wie oben beschrieben und mit einer Bearbeitungseinheit zum Schneiden von Materialteilen aus einer Materialbahn, die auf der Fördereinrichtung aufliegt.

Ein Verfahren zum Abnehmen eines Materialteils, das auf einer Fördereinrichtung aufliegt, umfasst die Schritte: Anhaften wenigstens eines Materialteils im Bereich einer Abnahmeposition an einem drehbaren Aufnehmer einer Abnahmevorrichtung; Aufwickeln des angehafteten Materialteils auf den Aufnehmer durch eine Drehbewegung des Aufnehmers; Bewegen des Aufnehmers der Abnahmevorrichtung mit dem aufgewickelten Materialteil zu einer Ablageposition; Freigeben und/oder Ablegen des aufgewickelten Materialteils in einem aufgewickelten Zustand in oder an einem Transportbehälter an der Ablageposition.

Die Aufwickelvorrichtung kann eine Führungsvorrichtung aufweisen, die in einem Abstand vom Aufnehmer angeordnet ist. Die Führungsvorrichtung weist eine leicht gebogene Form auf entsprechend dem Umfang des Aufnehmers. Mittels der Führungsvorrichtung wird sichergestellt, dass ein Gewebematerialteil sicher aufgewickelt werden kann.

Die Transportvorrichtung kann mehrere Ablagebereiche aufweisen, die durch die Partitionierungsstrukturen gebildet werden. Die Ablagebereiche sind bspw. als Fächer ausgebildet und dienen der Ablage der aufgewickelten Gewebematerialteile, wobei jeder Ablagebereich mit einem Gewebematerialteil bestückt wird.

Jedes Fach oder jeder Ablagebereich kann einen Bereich aufweisen, der in seinem Durchmesser enger wird, sodass beim Einführen des Gewebematerialteils in den Ablagebereich eine Klemmung bewirkt wird und somit das aufgewickelte Gewebematerialteil sicher in dem Ablagebereich verbleibt. Es kann auch ein flexibler Vorsprung im oberen Bereich des Faches vorgesehen sein, der ein einfaches Einführen des Gewebematerialteils ermöglicht, jedoch bei einer Herausnehmbewegung einen Widerstand bildet und das aufgewickelte Gewebematerialteil somit wie ein Widerhaken in dem Ablagebereich festhält.

Der Aufnehmer kann adhesive Bereiche aufweisen, um ein Anhaften des aufzuwickelnden Gewebematerialteils zu ermöglichen.

Der Aufnehmer kann kleine Nadeln oder eine raue Oberfläche aufweisen, um ein Anhaften des aufzuwickelnden Gewebematerialteils an der Oberfläche des Aufnehmers zu ermöglichen.

Die Gewebematerialteile können dabei als Materialteile ausgebildet sein, die aus einem flexiblen Material ausgeschnitten werden, um ein Aufwickeln zu ermöglichen, wie bspw. Airbags oder Airbagteile. Das Material kann ein flexibles Material sein, insbesondere in Form von technischen Textilien oder Gewebe (woven, non-woven), Kohlefaser, Papier, Glasfaser, Airbag- bzw. OPW-Gewebe, Sitzbezüge, Vliesmaterial oder beschichtete oder unbeschichtete, ein- oder mehrlagige Metall- oder Kunststofffolien, die auf einer im Wesentlichen horizontalen Fördervorrichtung befördert werden.

Vorzugsweise ist mindestens eines der Gelenke als Drehgelenk ausgestaltet, um eine Rotation des ersten Gelenkarms, des zweiten Gelenkarms und/oder des dritten Gelenkarms um die entsprechende Längsachse zu ermöglichen.

Beim Aufwickeln des Gewebematerialteils auf den drehbaren Aufnehmer ist die Rotationsachse R des Aufnehmers quer zur horizontalen Ebene der Fördereinrichtung, auf der das Gewebematerialteil aufliegt, angeordnet.

Der Aufnehmer kann beim Aufwickeln entweder in Uhrzeigerrichtung oder entgegengesetzt zur Uhrzeigerrichtung um ihre Rotationsachse R rotieren.

Die Aufwickelvorrichtung kann quer zur Förderrichtung F der Fördereinrichtung verstellbar sein, sodass die Aufwickelvorrichtung das Gewebematerialteil an unterschiedlichen Positionen in Bezug auf die Förderrichtung F der Fördereinrichtung aufwickeln kann.

Die Aufwickelvorrichtung kann entlang der Förderrichtung der Fördereinrichtung verstellbar sein.

Die Aufwickelvorrichtung kann in vertikaler Richtung verstellbar sein.

Die Ablageposition B kann höher, niedriger oder gleichhoch wie Abnahmeposition A auf der Fördereinrichtung, auf der das Gewebematerialteil aufliegt, sein.

Der Aufnehmer kann als Abnahmewalze ausgebildet sein.

Die Abnahmewalze kann einen kreisförmigen oder auch mehreckigen Querschnitt aufweisen. Die Abnahmewalze kann als zylindrischer Körper ausgebildet sein, der sich entlang seiner Rotationsachse erstreckt.

Die Aufwickelvorrichtung kann nach dem Aufwickeln des Gewebematerialteils in Förderrichtung der Fördereinrichtung bewegbar sein und das Gewebematerialteil kann an der Ablagestelle freigegeben werden, wobei der Aufnehmer beim Ablagevorgang des Gewebematerialteils mit seiner Rotationsachse überwiegend vertikal positioniert ist.

Es können mehrere Aufwickelvorrichtungen angeordnet sein, die voneinander beabstandet sind, wobei jede Aufwickelvorrichtung jeweils einer Förderbahn von Gewebematerialteilen der Fördereinrichtung zugeordnet ist.

### Kurze Beschreibung der Zeichnungen

Im Folgenden wird die Erfindung anhand von Figuren näher beschrieben. In den Figuren zeigen:
- Fig. 1: eine perspektivische Darstellung eines Systems zum Abtransportieren von Materialteilen;
- Fig. 2: eine schematische Darstellung einer Aufwickelvorrichtung;
- Fig. 3: eine schematische Darstellung einer Abnahmewalze der Aufwickelvorrichtung;
- Fig. 4a, 4b: eine schematische Darstellung eines Aufwickelvorgangs eines ausgeschnittenen Materialteils auf die Abnahmewalze;
- Fig. 5: einen Querschnitt einer Abnahmewalze mit mehreren Öffnungen;
- Fig. 6: eine schematische Darstellung der Abnahmewalze mit mehreren Öffnungen;
- Fig. 7: einen Querschnitt einer Abnahmewalze mit einer Greifvorrichtung;
- Fig. 8: eine schematische Darstellung der Abnahmewalze mit einer Greifvorrichtung;
- Fig. 9: eine Draufsicht auf ein System zum Abtransportieren von Gewebematerialteilen;
- Fig. 10: eine schematische Darstellung der Abnahmevorrichtung beim Ablegen eines Materialteils;
- Fig. 11: eine perspektivische Darstellung einer Anlage zum Schneiden und Transportieren von Gewebematerialteilen;
- Fig. 12: ein erfindungsgemäßes Verfahren.

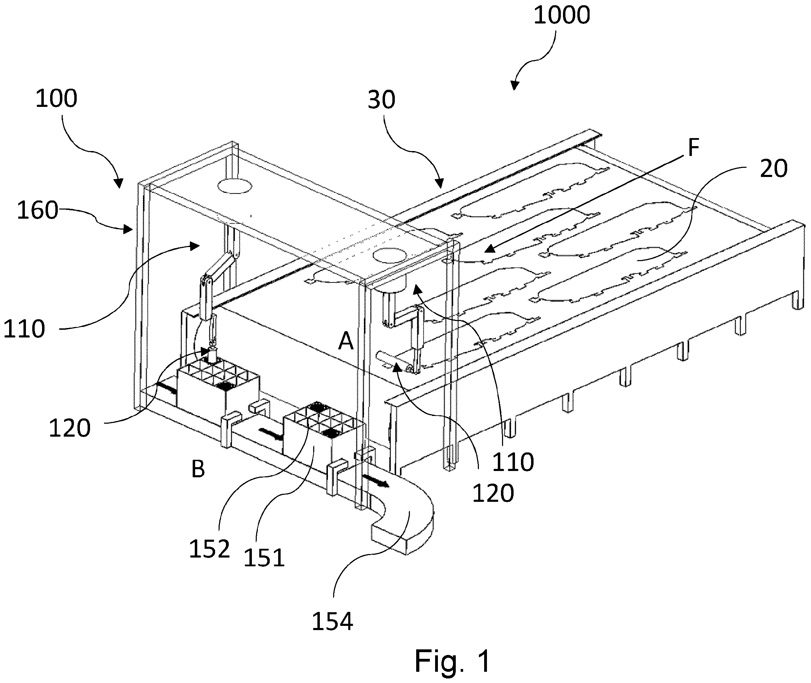

In Fig. 1 ist eine perspektivische Darstellung eines Systems zum Abtransportieren von flexiblen bzw. biegeschlaffen Materialteilen 20 dargestellt. Die biegeschlaffen bzw. flexiblen Materialteile 20 kommen auf einer Fördereinrichtung 30, die beispielsweise als Förderband ausgestaltet ist, an und werden in Förderrichtung F befördert.

Die erfindungsgemäße Abnahmevorrichtung 100 ist beispielsweise am Ende der Fördereinrichtung 30 angeordnet und nimmt die ankommenden Materialteile 20 an einer Ablageposition A auf und befördert diese von einer Abnahmeposition A zu einer Ablageposition B.

Die Abnahmevorrichtung 100 enthält eine oder mehrere Aufwickelvorrichtungen 110, die an einem Gestell 160 angeordnet sind.

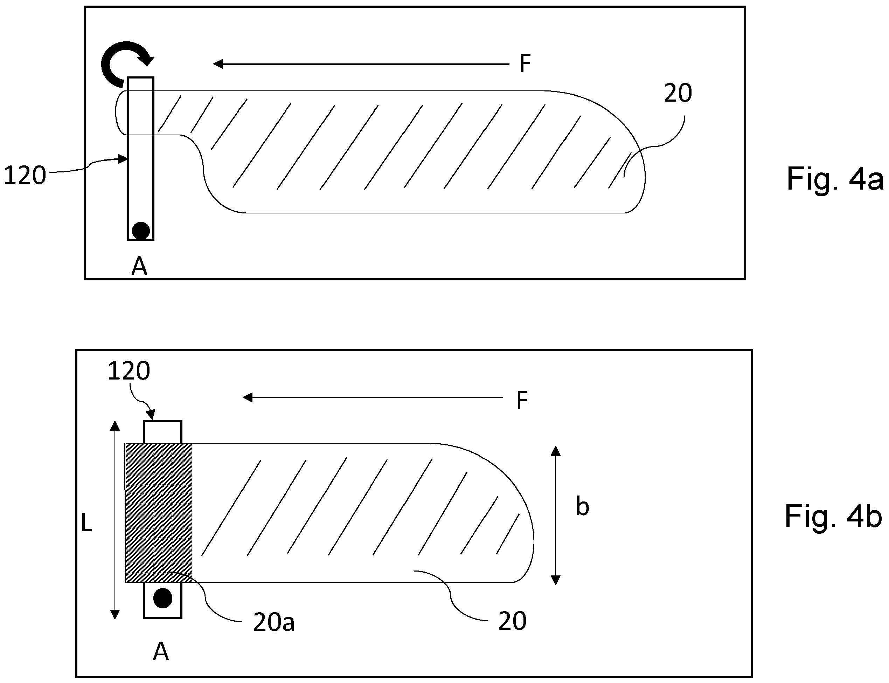

Jede Aufwickelvorrichtung 110 weist einen Aufnehmer 120 auf, der im Folgenden als Abnahmewalze 120 dargestellt ist. Die Abnahmewalze 120 ist an der Abnahmeposition A im Wesentlichen horizontal und quer zur Förderrichtung F ausgerichtet und kann ein ankommendes Materialteil 20 aufwickeln. Die Abnahmewalze 120 weist eine Länge L auf, die wenigstens der Breite b eines Materialteils 20 entspricht (siehe Fig. 4b).

Nachdem das Materialteil 20 auf die Abnahmewalze 120 aufgewickelt ist, wird die Aufwickelvorrichtung 110 zur Ablageposition B verfahren, an der das aufgewickelte Materialteil 20a in einem Transportbehälter 151 abgelegt wird. Die Transportbehälter 151 sind beispielsweise kastenförmig aufgebaut und weisen eine Partitionierungsstruktur 152 auf, die mehrere Ablagebereiche 153 bildet, wobei das aufgewickelte Materialteil 20a jeweils in einen Ablagebereich 153 eingeführt und dort abgelegt wird.

Nachdem ein Transportbehälter 151 vollständig befüllt ist, d.h. alle Ablagebereiche 153 mit jeweils einem aufgewickelten Materialteil 20a befüllt sind, wird der Transportbehälter 151 über ein Förderband 154 weg befördert und es wird ein leerer Transportbehälter 151 an die Ablageposition B befördert, um erneut befüllt zu werden. Das Förderband 154 ist vorzugsweise orthogonal zur Förderrichtung angeordnet. Es ist aber auch möglich, rechts und/oder links von der Fördereinrichtung 30 ein oder mehrere Förderbänder 154 zu platzieren, um die aufgewickelten Materialteile 20 abzulegen.

Die Figuren sind sowohl anhand von Gewebematerialteilen 20 als auch von Materialteilen 20 beschrieben worden, wobei die beiden Begriffe hier synonym verwendet werden.

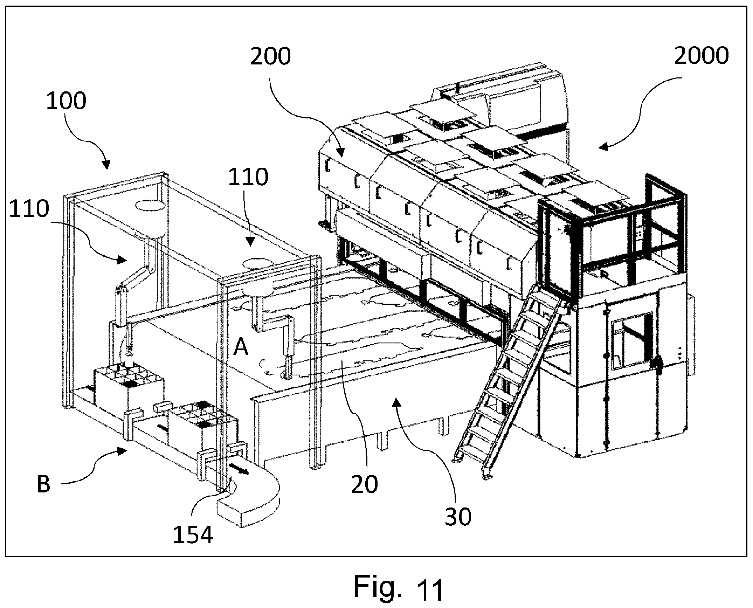

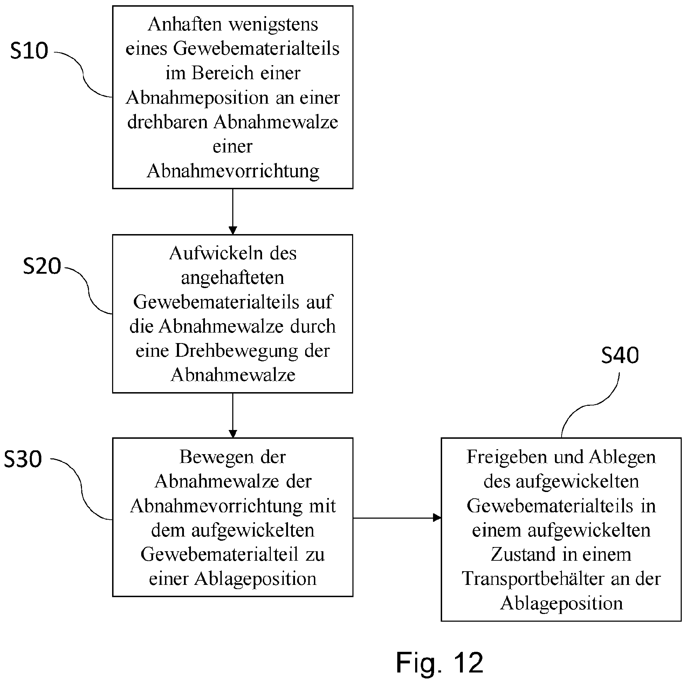

Um die Erfindung einfach darzustellen, sind hier bereits geschnittene Gewebematerialteile 20 auf der Fördereinrichtung 30 dargestellt, die zueinander versetzt in mehreren Spuren angeordnet sind und in Förderrichtung F gefördert werden. In Förderrichtung F gesehen, ist vor der Abnahmevorrichtung 100 (entgegengesetzt zur Förderrichtung F) eine Schneid- bzw. Bearbeitungsvorrichtung 200 (in Fig. 1 nicht gezeigt, siehe Fig. 11 und Fig. 12) angeordnet, die zum Schneiden einer breiten Bahn eines Gewebes oder Materials angeordnet ist. Diese Schneid- bzw. Bearbeitungsvorrichtung 200 kann als Laserschneidvorrichtung ausgebildet sein und die Gewebematerialteile 20 aus der zugeführten Materialbahn oder der Gewebebahn mit vorzugsweise maximaler Ausbeute ausschneiden. Am Ende der Fördereinrichtung 30 (in Förderrichtung F) ist die Abnahmevorrichtung 100 angeordnet bzw. so aufgestellt, dass sie von oben auf die Förderebene der Fördereinrichtung 30 und die darauf liegenden Materialteile 20 zugreifen kann.

Es ist in den Figuren nicht näher dargestellt und für die Erfindung auch nicht wesentlich, jedoch ist es bei einer Schneidanlage erforderlich, das Restmaterial oder das Restgewebe von den ausgeschnittenen Materialteilen zu trennen, bevor diese von der erfindungsgemäßen Abnahmevorrichtung 100 aufgewickelt und abtransportiert werden.

Die Abnahmevorrichtung 100 umfasst ein Gestell 160. Das Gestell 160 kann bspw. vier vertikale Streben enthalten. Im oberen Bereich kann eine obere Abdeckung vorgesehen sein. Das Gestell 160 ist so aufgestellt, dass es oberhalb der Fördereinrichtung 30 angeordnet ist.

An dem Gestell 160 sind eine oder mehrere Aufwickelvorrichtungen 110 befestigt, die am Gestell 160 fest fixiert sind oder in einer anderen Ausführung in ihrer Position zum Gestell verfahrbar bzw. verschiebbar oder beweglich sind, um an verschiedene Fördereinrichtungen bzw. verschiedene Abnahmepositionen aufgrund verschiedener Materialbahnbreiten angepasst zu werden. Die eine oder mehrere Aufwickelvorrichtungen 110 können auch anderweitig angeordnet sein, um auf die Materialteile zuzugreifen, die auf der Fördereinrichtung 30 bewegt werden.

Eine Abnahmevorrichtung 100 enthält eine oder mehrere Aufwickelvorrichtungen 110, die am Gestell 160 angebracht sind und dazu geeignet sind, ein oder mehrere Gewebematerialteile 20 von der Fördereinrichtung 30 an der jeweiligen Abnahmeposition A abzunehmen.

Jede Aufwickelvorrichtung 110 enthält eine Abnahmewalze 120, mit der ein abzunehmendes Gewebematerialteil 20, dass sich an einer Abnahmeposition A auf der Fördereinrichtung 30 befindet, kontaktiert wird, wobei die Aufwickelvorrichtung 110 das abzunehmende Gewebematerialteil 20 an der Abnahmewalze 120 anhaftet und um die Abnahmewalze 120 aufwickelt.

Danach bewegt die Aufwickelvorrichtung 110 das aufgewickelte Gewebematerialteil 20 zu einem Transportbehälter 151, der sich an der Ablageposition B befindet. Dort wird das aufgewickelte Gewebematerialteil 20 in einem aufgewickelten Zustand in dem Transportbehälter 151 abgelegt.

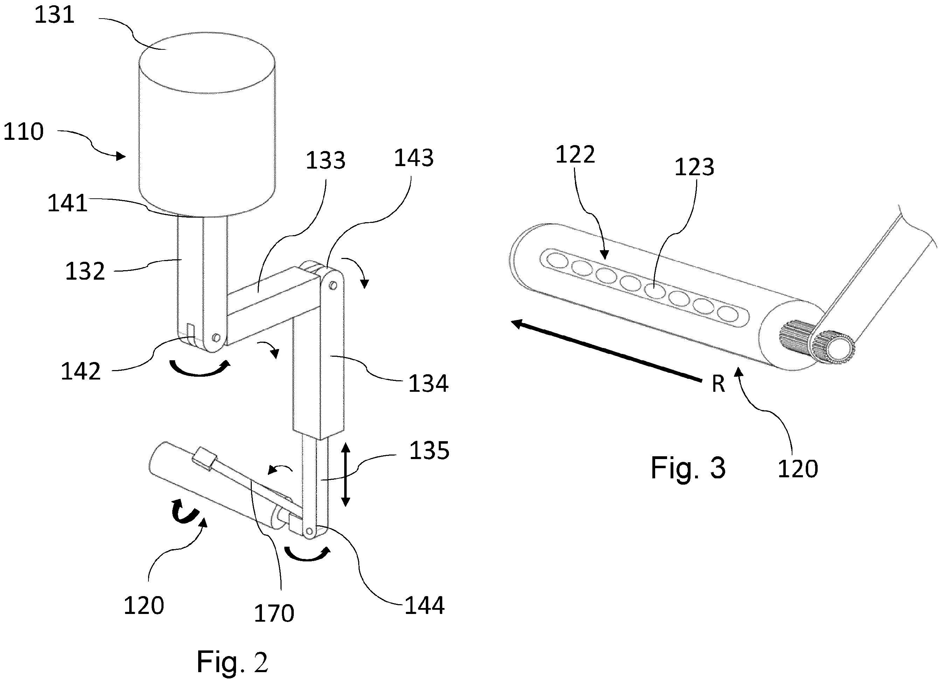

Der Aufbau einer Aufwickelvorrichtung 110 wird anhand der Fig. 2, 3 und Fig. 5-9 ausführlicher beschrieben.

In Fig. 2 ist eine erfindungsgemäße Aufwickelvorrichtung 110 dargestellt. In dem Beispiel gemäß Fig. 2 weist die Aufwickelvorrichtung 110 einen Sockel 131 auf, der mit einem ersten Gelenkarm 132 verbunden ist. Der erste Gelenkarm 132 ist mit einem zweiten Gelenkarm 133 verbunden und der zweite Gelenkarm 133 ist mit einem dritten Gelenkarm 134 verbunden. Am dritten Gelenkarm 134 ist die Abnahmewalze 120 angelenkt. Die Aufwickelvorrichtung 110 kann Bewegungen in verschiedenste Richtungen ausführen.

Das erste Gelenk 141, das zweite Gelenk 142, das dritte Gelenk 143 und das vierte Gelenk 144 können entweder als translatorische Gelenke, rotatorische Gelenke oder als Kombination davon ausgebildet sein. Ein translatorisches Gelenk verbindet zwei Linearachsen, wobei sich der nächste Gelenkarm mittels des translatorischen Gelenks auf gerader Bahn bewegt. Die Montage des translatorischen Gelenks erfolgt dabei auf Roll- oder Gleitlagern. Ein rotatorisches Gelenk ermöglicht eine Rotation um eine Rotationsachse der verbundenen Gelenkarme, sodass sich der jeweils nächste Gelenkarm um eine Rotationsachse entlang dreht. Die Montage erfolgt auf Drehlagern. Die Rotationsachse des Gelenks kann dabei entlang der Längsachse verlaufen oder quer zur Längserstreckung des Gelenkarms. Mittels eines Kugelgelenks sind verschiedene oder Rotationsachsen möglich.

So ist es möglich, dass der erste Gelenkarm 132 um seine Längsachse gedreht werden kann. Der erste Gelenkarm 132 ist mit dem zweiten Gelenkarm 133 über ein Gelenk 142 verbunden, wodurch der zweite Gelenkarm 133 aus einer Horizontalen herausgeschwenkt werden kann, um somit die Abnahmewalze 120 tiefer zu positionieren. Durch die Drehbewegung des ersten Gelenkarms 132 um die eigene Längsachse lässt sich die Abanahmewalze 120 in einem großen Radius um den Sockel 131 der Aufwickelvorrichtung 110 herumbewegen.

Der zweite Gelenkarm 133 ist mittels eines zweiten Gelenks 143 mit dem dritten Gelenkarm 134 verbunden, um auch diesen mit einer Drehbewegung zu bewegen.

Der dritte Gelenkarm 134 ist in seiner Längsausdehnung verstellbar, in dem ein ausfahrbares Element 135 im Gelenkarm 134 aufgenommen ist, an dem Abnahmewalze 120 befestigt ist. Durch die Längsverstellbarkeit kann somit die Abnahmewalze 120 auf die Förderebene abgesenkt werden, um dort das ankommende Materialteil 20 aufzunehmen. Die Abnahmewalze 120 ist am unteren Ende des dritten Gelenkarms 134 mit einem dritten Gelenk 144 verbunden und kann dort von der Horizontalen in eine Vertikale bzw. auch in eine angewinkelte Position verfahren werden.

In Fig. 2 ist das erste Gelenk 141 als Rotationsgelenk ausgebildet, das eine Drehung des ersten Gelenkarmes 132 um seine Längsachse ermöglicht. Das zweite Gelenk 142 ist auch als ein Rotationsgelenk umgesetzt und ermöglicht die Drehung des zweiten Gelenkarms 133 orthogonal zu der Längsachse des ersten Gelenkarms 132. Das dritte Gelenk 143 ist auch ein Rotationsgelenk und ermöglicht eine Drehung orthogonal zur Längsachse des zweiten Gelenkarms 133. Das vierte Gelenk 144 ermöglicht eine Rotation um zwei Rotationsachsen, wobei die erste Rotationsachse eine Drehung der Abnahmewalze 120 um ihre Längsachse des dritten Gelenkarms 134 ermöglicht und die zweite Rotationsachse eine Drehung oder Schwenken der Abnahmewalze 120 aus der Horizontalen in die Vertikale ermöglicht. Darüber hinaus ist die Abnahmewalze 120 um ihre eigene Längsachse drehbar. Somit kann die Abnahmewalze 120 jeden Punkt im kugelförmigen Raum erreichen oder dort platziert werden, der durch das Zentrum des vierten Gelenks 144 und die Länge der Abnahmewalze 120 definiert ist.

Die Abnahmewalze 120 kann in der Horizontalen als auch in der Vertikalen eine Drehbewegung um ihre Längsachse ausführen.

Die Aufwickelvorrichtung 110 enthält auch eine Klemmvorrichtung 170, die beispielweise in Form eines Stabs umgesetzt wird. Beispielsweise kann diese am dritten Gelenkarm 134 bzw. an einer Halterung der Abnahmewalze 120 angeordnet sein. Die Klemmvorrichtung 170 kann das aufgewickelte Materialteil 20a nach einem Aufwickelvorgang festklemmen, um somit ein unbeabsichtigtes Abrollen des Gewebematerialteils von der Abnahmewalze 120 zu verhindern. Die Klemmvorrichtung 170 hat die Funktion das Gewebematerialteil 20 auf der Abnahmewalze 120 festzuhalten, nachdem ein Gewebematerialteil 20 vollkommen auf der Abnahmewalze 120 aufgewickelt wurde. Vor und während des Aufwickelns des Gewebematerialteils 20 ist die Klemmvorrichtung 170 in einer Ruheposition, d.h. in einem ausreichenden Abstand von der Umfangsoberfläche 124 der Abnahmewalze 120.

Nach dem vollständigen Aufwickeln des Gewebematerialteils 20 auf die Abnahmewalze 120 wird die Klemmvorrichtung 170 aus ihrer Ruheposition in eine Klemmposition bewegt, gedreht oder geklappt, sodass die Klemmvorrichtung 170 in Kontakt mit dem aufgewickelten Gewebematerialteil 20 kommt und eine ausreichende Kraft auf das aufgewickelte Gewebematerialteil 20 ausübt, sodass verhindert wird, dass sich das Gewebematerialteil 20 von der Abnahmewalze 120 abwickelt. Die Klemmvorrichtung 170 kann dabei wenigstens in einem Bereich an die gekrümmte Oberfläche der Abnahmewalze bzw. des auf die Abnahmewalze aufgewickelten Gewebematerialteils angepasst sein, um somit besser am Gewebematerialteil anzuliegen.

Die erforderliche Kraft, die von Klemmvorrichtung 170 auf das aufgewickelte Gewebematerialteil ausgeübt werden soll, um ein Abrollen zu verhindern, kann aufgrund verschiedener Materialen bzw. verschiedener Größen der geschnittenen Materialteile und daraus resultierender verschiedener Radien auf der Abnahmewalze unterschiedlich sein und wird von der Steuerung überwacht und eingestellt.

Beispielsweise kann durch einen Sensor bestimmt werden, ob die von der Klemmvorrichtung 170 auf das Gewebematerialteil 20 ausgeübte Kraft einer voreingestellten Kraft entspricht.

Alternativ ist es möglich, dass die Klemmvorrichtung 170 federnd gelagert ist und im entspannten Zustand ausgeklappt ist und somit mit der Federkraft auf das aufgewickelte Gewebematerialteil 20 drückt. Für den Aufwickel- und Ablageprozess des Gewebematerialteils 20 wird die Klemmvorrichtung 170 in Richtung Aufwickelvorrichtung, insbesondere in Richtung des dritten Gelenkarms 134, gezogen bzw. eingeklappt.

Die mindestens eine Aufwickelvorrichtung 110 ist am Gestell 160 befestigt, wobei die Aufwickelvorrichtung 110 vollständig bzw. wenigstens Teile davon in der Förderrichtung F und entgegengesetzt zur Förderrichtung F bewegbar sind. Dafür ist im oberen Bereich des Gestells 160 bspw. an der oberen Abdeckung für jede Aufwickelvorrichtung 110 eine Führung bzw. Schiene ausgebildet (nicht abgebildet), die sich parallel zur Förderrichtung F erstreckt und die eine Bewegung der Aufwickelvorrichtung 110 in und entgegen der Förderrichtung F ermöglicht.

Zudem lässt sich jede Aufwickelvorrichtung 110 entlang einer Führung bzw. Schiene (nicht abgebildet) orthogonal oder quer zur Förderrichtung F bewegen. Somit kann die Aufwickelvorrichtung 110 an unterschiedlichen Positionen in Bezug zur Förderrichtung F positioniert werden und entlang der Führung orthogonal zur Förderrichtung F verstellt werden.

Um ein Zusammenstoßen von benachbarten Aufwickelvorrichtungen 110 zu verhindern, sind die Führungen der Aufwickelvorrichtungen 110 so am Gestell 160 positioniert, dass zwischen den Aufwickelvorrichtungen 110 ein ausreichend großer Abstand gewährleistet ist.

Somit kann für jede Aufwickelvorrichtung 110 ein Arbeitsbereich im Gestellraum definiert werden, in dem die Aufwickelvorrichtung 110 frei beweglich ist. Jeder Aufwickelvorrichtung 110 ist ein Bereich auf der Fördereinrichtung 30 zugewiesen, in dem sich die Abnahmeposition A befindet und an der die entsprechende Aufwickelvorrichtung 110 das Gewebematerialteil 20 aufnehmen kann. Weiter ist jeder Aufwickelvorrichtung 110 eine Ablageposition B zugeordnet, wobei die Aufwickelvorrichtung 110 zu der Ablageposition B verfahrbar ist. Die Aufwickelvorrichtung 110 legt das aufgewickelte Gewebematerialteil 20a an der jeweiligen Ablageposition B ab.

An einer Abnahmeposition A auf der Fördereinrichtung 30 wickelt die Aufwickelvorrichtung 110 ein Gewebematerialteil 20 auf und transportiert es zu einer Ablageposition B, wo die Aufwickelvorrichtung 110 das Gewebematerialteil 20 in einem Transportbehälter 151 ablegt. Der Transportbehälter 151 enthält eine Partitionierungsstruktur 152, die mehrere Ablagebereiche 153 im Transportbehälter 151 bildet. Jedes Gewebematerialteil 20 wird in einem aufgewickelten Zustand in bzw. an einem entsprechenden Ablagebereich 153 abgelegt. Die Partitionierungsstruktur 152 kann beispielweise als rechteckiges Gitter ausgebildet sein und mehrere rechteckige Ablagebereiche 153 oder auch rohrförmige Ablagebereiche 153 ausbilden. Jeder Ablagebereich 153 ist als Quader oder Hohlzylinder ausgebildet. Beispielweise ist der Transportbehälter 151 ähnlich wie eine Bierkiste ausgebildet.

In Fig. 2 sind die Gelenkarme mit rechteckigem oder quadratischem Querschnitt dargestellt. Es ist jedoch auch möglich, diese zylindrisch oder mit rundem Querschnitt auszubilden, wodurch sich eine Drehbewegung innerhalb des Gelenkarms realisieren lässt. Ebenso ist es möglich, jeden der Gelenkarme mit einer Längsverschiebbarkeit ähnlich wie beim dritten Gelenkarm auszubilden. Dadurch lassen sich die Verstellmöglichkeiten der Aufwickelvorrichtung 110 vergrößern.

Andererseits ist es auch möglich, die Abnahmewalze 120 durch eine sehr einfache Verstellstruktur zwischen Abnahmeposition und Ablageposition B zu bewegen. In einer einfachen Ausgestaltung ist dazu nur eine translatorische Verschiebbarkeit entlang der Förderrichtung nötig. Diese kann durch eine Tragschiene am Gestell 160 realisiert werden. An dieser Tragschiene ist ein in seiner Länge verstellbares vertikales Element befestigt, an dessen unteren Ende die Abnahmewalze 120 befestigt ist. Somit lässt sich die Abnahmewalze 120 durch translatorische und vertikale Verschiebung an der Abnahmeposition A positionieren, um das Materialteil 20 aufzuwickeln. Danach kann die Abnahmewalze 120 angehoben werden und über die Tragschiene in Förderrichtung zur Ablageposition B befördert werden.

In Fig. 3 ist eine Abnahmewalze 120 im Detail dargestellt. Die Abnahmewalze 120 weist eine zylindrische Form mit einer Rotationslängsachse R auf, um die die Abnahmewalze 120 gedreht wird. Die Abnahmewalze 120 weist eine Oberfläche 124 auf, in oder an der eine Saugvorrichtung 122 ausgebildet ist. Die Saugvorrichtung 122 kann mehrere Öffnungen 123 umfassen, die mit einem Überdruck bzw. einem Unterdruck beaufschlagt werden können.

Um ein Anhaften von Materialteilen 20 beim Aufwickelvorgang zu bewirken, werden die Öffnungen 123 mit einem Unterdruck beaufschlagt, der über die Aufwickelvorrichtung 110 zuführbar ist, um somit das Materialteil 20 an der Abnahmewalze 120 anzuhaften und mit einer nachfolgenden Drehbewegung der Abnahmewalze 120 den Aufwickelvorgang zu starten. Der Über- bzw. Unterdruck kann über Schlauchleitungen über die Gelenkarme zugeführt werden. Es ist aber auch möglich, den Über- bzw. Unterdruck in der Abnahmewalze 120 zu erzeugen. Die Dauer, der Zeitpunkt und/oder die Stärke des Über- bzw. Unterdrucks wird von der Steuerung gesteuert. Über einen oder mehrere Kontaktsensoren an der Abnahmewalze 120 wird festgestellt, ob das Gewebematerialteil 20 an der Abnahmewalze 120 anliegt. Dann kann die Drehbewegung der Abnahmewalze 120 beginnen, wobei der Unterdruck ggf. auch für die Dauer des Aufwickelns beibehalten wird und erst nach dem Ausklappen der Klemmvorrichtung 170 abgestellt wird.

Über einen oder mehrere Kontaktsensoren an der Abnahmewalze wird festgestellt, ob sich das Gewebematerialteil 20 beim Ablösen bereits von der Abnahmewalze gelöst hat. Dann kann die Überdruckzufuhr abgestellt werden.

Die Steuerung der Über- bzw. Unterdruckzufuhr kann alternativ oder zusätzlich auch zeitbasiert oder eventgesteuert durchgeführt werden.

Der Aufwickelvorgang ist in den Fig. 4A und 4B im Detail dargestellt. Die im Abnahmebereich A angeordnete Abnahmewalze 120 führt mittels der Saugvorrichtung 122 und einem zugeführten Unterdruck einen Anhaftungsvorgang für das ankommende Materialteil 20 durch, sodass dieses von der Förderebene bzw. dem Förderband der Fördereinrichtung 30 aufgenommen wird und an der Oberfläche 124 der Abnahmewalze 120 anhaftet. Dann dreht sich die Abnahmewalze 120 und es erfolgt ein Aufwickelvorgang, der in Fig. 4B teilweise dargestellt ist und ein Materialteil 20 darstellt, welches teilweise bereits aufgewickelt ist.

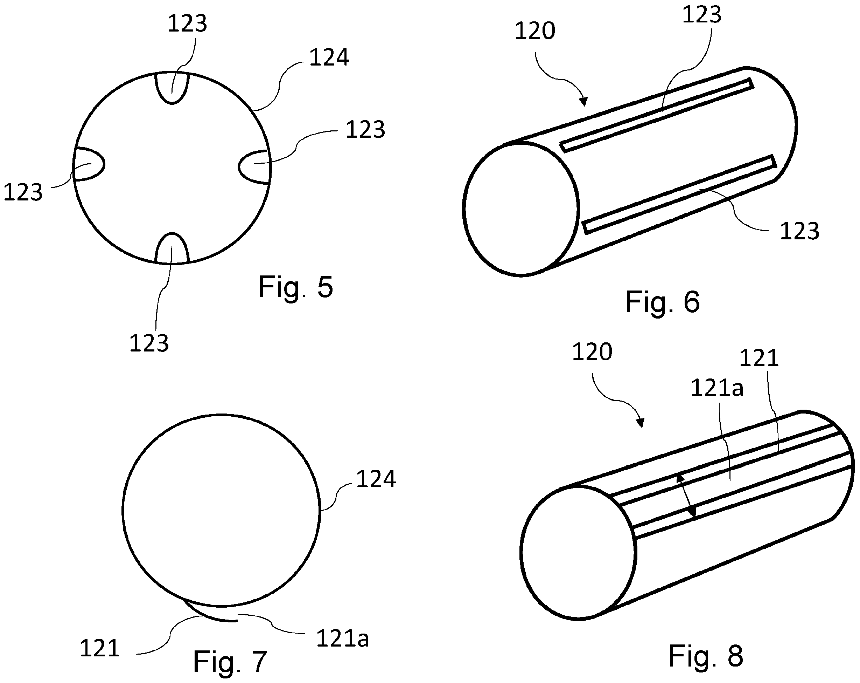

In Fig. 5 ist eine Abnahmewalze 120 im Querschnitt dargestellt. Hier ist dargestellt, dass die Abnahmewalze 120 Öffnungen 123 der Saugvorrichtung 122, die mittels Überdruck bzw. Unterdruck beaufschlagt werden können, an verschiedenen Positionen aufweisen kann, wodurch es möglich ist, das Materialteil 20 an möglichst vielen Stellen der Abnahmewalze 120 aufzunehmen und dort anzuhaften, um den Aufwickelvorgang zu starten.

In Fig. 6 ist die Abnahmewalze 120 in einer perspektivischen Darstellung dargestellt, wobei die Öffnungen 123 hier als Längsfugen dargestellt sind und als eine gemeinsame Öffnung bzw. als viele kleine Öffnungen ausgebildet sein können.

In Fig. 7 ist ein Querschnitt einer Abnahmewalze 120 dargestellt, bei der in einem Bereich der Abnahmewalze 120 eine Greifvorrichtung 121 vorhanden ist, die einen Spalt 121a bildet, in den ein ankommendes Materialteil 20 eingeführt wird, wobei der Spalt 121a nach dem Einführen des Materialteils 20 in den Spalt 121a verkleinert werden kann, um so ein Festklemmen des Materialteils 20 an der Abnahmewalze 120 zu bewirken und mittels einer nachfolgenden Drehbewegung das Materialteil 20 um die Abnahmewalze 120 aufzuwickeln.

Fig. 8 zeigt eine perspektivische Darstellung der Abnahmewalze 120 mit einer Greifvorrichtung 121, wobei hier zwei Bügel oder Klappen dargestellt sind, die einen Spalt 121a bilden, der nach dem Einführen des Materialteils 20 in den Spalt 121a verkleinert werden kann, um ein Festklemmen zu bewirken.

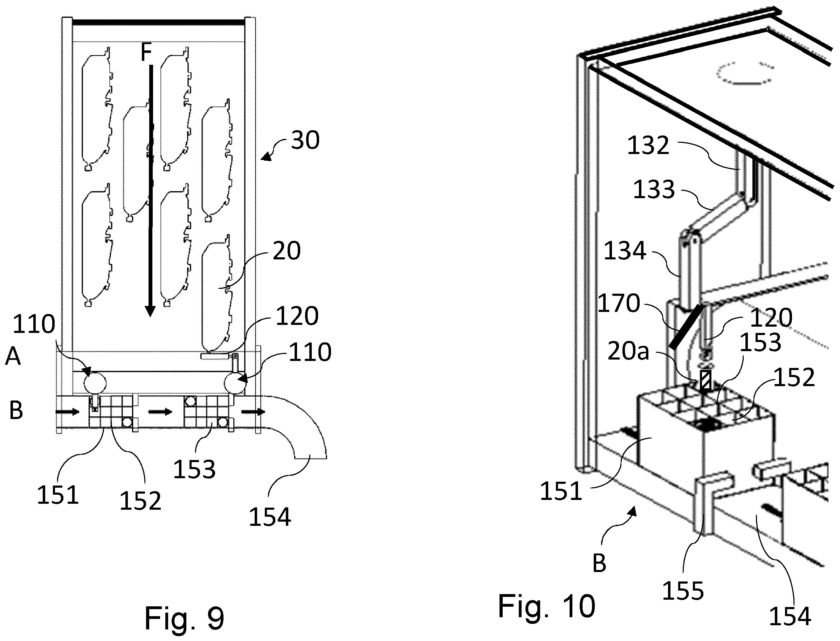

In Fig. 9 ist eine Draufsicht auf ein System zum Abtransportieren von Materialteilen 20 dargestellt. Analog zur Darstellung in Fig. 1 werden die ankommenden Materialteile 20 auf der Fördereinrichtung 30 in Förderrichtung F bewegt, um an einer Abnahmeposition A von einer Abnahmewalze 120 der wenigstens einen Aufwickelvorrichtung 110 aufgewickelt zu werden. Nachdem die eine Aufwickelvorrichtung 110 ein Materialteil 20 aufgewickelt hat, wird diese Aufwickelvorrichtung 110 (links dargestellt) mit dem aufgewickelten Materialteil 20a zur Ablageposition B verfahren, um dort das aufgewickelte Materialteil 20a in einem Ablagebereich 153 eines Transportbehälters 151 abzulegen.

Hierzu wird auf Fig. 10 verwiesen, bei der die Ablage eines aufgewickelten Materialteils 20a näher dargestellt ist. Die Aufwickelvorrichtung 110 mit der Abnahmewalze 120 ist mit dem aufgewickelten Materialteil 20a in den Bereich der Ablageposition B verfahren oder bewegt worden. Dort wurde die Abnahmewalze 120 in eine Vertikale geschwenkt. Für den Ablagevorgang des aufgewickelten Materialteils 20a verfährt die Aufwickelvorrichtung 110 jeweils in den Bereich eines vorgesehenen Ablagebereichs 153, der in dem Transportbehälter 151 noch frei ist. Das Materialteil 20a wird dann in den freien Ablagebereich 153 eingeführt und abgelegt.

Die Ablagebereiche 153 im Transportbehälter 151 weisen eine Tiefe auf, die in etwa der Breite eines Materialteils 20 entspricht. Die Weite bzw. der Durchmesser eines Ablagebereichs 153 ist dabei weit genug, um ein aufgewickeltes Materialteil 20a aufzunehmen.

Im oberen Bereich eines Ablagebereichs 153 können Rückhaltemittel angeordnet sein, die ein Einstecken bzw. Einführen eines aufgewickelten Materialteils 20a ermöglichen, jedoch ein Hochziehen des aufgewickelten Materialteils 20a beim Rausbewegen der Abnahmewalze 120 verhindern, sodass das aufgewickelte Materialteil 20a im Ablagebereich 153 verbleibt. Um den Ablageprozess weiter zu vereinfachen, ist es möglich, der Abnahmewalze 120 einen Überdruck zuzuführen. Darüber hinaus ist die Klemmvorrichtung 170 vor dem Ablegen an der Ablageposition B von der Abnahmewalze 120 wegbewegt worden, sodass ein Lösen des aufgewickelten Materialteils 20a von der Abnahmewalze 120 ermöglicht wird.

In Fig. 11 ist eine schematische Darstellung einer Anlage mit einem System zum Abtransportieren von Materialteilen 20 dargestellt. Im rechten Bereich ist eine Bearbeitungsvorrichtung 200 dargestellt, die beispielsweise als Laser-Schneidvorrichtung ausgebildet ist und ein Schneiden von Materialteilen, insbesondere Gewebematerialteilen 20, die zur Airbag-Produktion verwendet werden, durchführt.

Die aufzunehmenden Materialteile 20 bzw. Gewebematerialteile 20 werden, wie zuvor beschrieben, jeweils von einer der Abnahmewalzen 120 aufgenommen und mittels der Aufwickelvorrichtung 110 jeweils in die Transportbehälter 151 im Bereich der Ablageposition B befördert und dort in den Ablagebereichen 153 abgelegt.

Die erfindungsgemäße Ausgestaltung ist insbesondere deshalb vorteilhaft, da durch das Aufwickeln der meist sehr großen ausgeschnittenen Materialteile nur ein geringer Platzbedarf erforderlich ist, um die fertig geschnittenen Materialteile zu lagern und zu transportieren. Dies gilt insbesondere im Vergleich zu einem manuellen Abnehmen und einem Transportieren von nicht aufgewickelten Materialteilen und stellt eine sehr große Platzeinsparung dar.

In Fig. 12 ist ein Verfahrensablauf des erfindungsgemäßen Verfahrens dargestellt. In Schritt S 10 wird das wenigstens eine Gewebematerialteil/Materialteil 20 im Bereich einer Abnahmeposition A an einer drehbaren Abnahmewalze 120 der Aufwickelvorrichtung 110 angehaftet. Im Schritt S20 wird das angehaftete Materialteil 20 aufgewickelt, indem die Abnahmewalze 120 gedreht wird, bis das Materialteil 20 vollständig aufgewickelt ist. In Schritt S30 wird die Abnahmewalze 120 mit dem aufgewickelten Gewebematerialteil/Materialteil 20a zur Ablageposition B bewegt und im Schritt S40 wird das aufgewickelte Gewebematerialteil/Materialteil 20a freigegeben und im Transportbehälter 151 in einem Ablagebereich 153 abgelegt.

Das System zum Abtransportieren von Gewebematerialteilen 20, wie in Fig. 9, 10 und 11 dargestellt, umfasst weiter ein Förderband 154, auf dem die leeren Transportbehälter 151 zur Ablageposition B transportiert werden und nach einer Befüllung wegtransportiert werden.

Auf dem Förderband 154 sind mehrere Transportbehälter 151 positioniert, wobei ein jeweiliger Transportbehälter 151 an einer bestimmten der Aufwickelvorrichtung 110 zugeordneten Position auf dem Förderband 154 positioniert ist. Es sind Trennmittel oder Stoppmittel 155 vorgesehen, die ein Positionieren der Transportbehälter 151 auf dem Förderband 154 ermöglichen, um so einen Transportbehälter 151 einer Aufwickelvorrichtung zuzuordnen bzw. die genaue Position des Transportbehälters 151 zu definieren, um die Gewebematerialteile 20 abzulegen.

Eine Steuerung (nicht dargestellt) erfasst, bspw. optisch über eine Kamera oder eine Lichtschranke, dass sich ein Gewebematerialteil 20 in einer Position nahe der Abnahmeposition A zum Aufnehmen des Gewebematerialteils 20 befindet. Dann wird die Abnahmewalze 20 so positioniert, dass diese das Gewebematerialteil 20 anhaften kann. Dazu fährt die Aufwickelvorrichtung 110 etwa auf die Mittellinie des Gewebematerialteils 20 und senkt dort die Abnahmewalze 120 auf die Förderebene ab, sodass das Gewebematerialteil 20 von der Saug- und/oder Greifvorrichtung 121, 122 der Abnahmewalze 120 erfasst und an der Oberfläche 124 der Abnahmewalze 120 angehaftet werden kann. Nachdem entweder der Spalt 121a der Greifvorrichtung 121 ausreichend geschlossen ist oder lange genug ein Unterdruck an der Saugvorrichtung 122 angelegen hat, kann die Steuerung eine Drehbewegung der Abnahmewalze 120 initiieren. Dazu kann ggf. auch mittels einer Kamera oder einem oder mehreren Sensoren an der Abnahmewalze 120 erkannt werden, dass das Gewebematerialteil 20 an der Oberfläche 124 der Abnahmewalze 120 anhaftet und die Drehbewegung gestartet werden kann. Die Dauer der Drehbewegung wird bestimmt über die Länge des aufzuwickelnden Gewebematerialteils 20 und dem Durchmesser der Abnahmewalze 120. Nachdem das Gewebematerialteil 20 aufgewickelt ist, weil die Abnahmewalze 120 die erforderliche Anzahl von Umdrehungen durchgeführt hat, ist der Aufrollprozess beendet. Dann kann die Klemmvorrichtung 170 der Aufwickelvorrichtung 110 ausgeklappt werden, um ein Abwickeln des aufgewickelten Gewebematerialteils 20a von der Abnahmewalze 120 zu verhindern. Über entsprechende Drehbewegungen der Gelenke 142, 143, 144 bzw. translatorische Bewegungen der Gelenkarme 132, 133 und 134/135 wird die Abnahmewalze 120 mit dem festgeklemmten und aufgewickelten Gewebematerialteil 20a zur Ablageposition B geschwenkt oder bewegt. Dort wird je nach Ausrichtung der Ablagebereiche die Abnahmewalze 120 in eine Einschubrichtung gebracht, die der Ausrichtung der Ablagebereiche 153 entspricht. Dann wird die Abnahmewalze 120 mit dem aufgewickelten Gewebematerialteil 20 wenigstens teilweise in den Ablagebereich 153, der auch als Schacht bezeichnet werden kann, eingeführt. Davor oder nach dem Einführen des aufgewickelten Gewebematerialteils 20a in den Ablagebereich 153 wird die Klemmvorrichtung 170 von dem aufgewickelten Gewebematerialteil 20 gelöst, sodass dieses sich von der Abnahmewalze 120 lösen kann, um in dem Ablagebereich 153 zu verbleiben bzw. um dort abgelegt werden zu können. Alternativ oder unterstützend kann über die Saugvorrichtung 122 ein Überdruck ausgegeben werden, der ein Ablösen des aufgewickelten Gewebematerialteils 20a von der Abnahmewalze 120 unterstützt oder ermöglicht. Falls eine Greifvorrichtung 121 implementiert ist, wird der Spalt 121a so geöffnet, dass sich das Gewebematerialteil 20 von der Abnahmewalze 120 lösen kann. Die Steuerung oder der Controller der Abnahmevorrichtung 100 kann optisch mittels einer Kamera oder über Sensoren in dem Transportbehälter 151 feststellen, welche Ablagebereiche 153 des Transportbehälters 151 frei bzw. belegt sind, um den nächsten freien Ablageplatz bzw. Ablagebereich 153 für ein aufgewickeltes Gewebematerialteil 20a zu bestimmen und die Aufwickelvorrichtung 110 bzw. die Abnahmewalze 120 entsprechend zu positionieren. Stellt die Steuerung fest, dass alle Ablagebereiche 153 eines Transportbehälters 151 voll sind, wird dieser über das Förderband 154 abtransportiert und ein neuer bzw. leerer Transportbehälter 151 wird an die Ablageposition B bewegt.

Die beschriebene Greifvorrichtung 121 kann als Alternative zur Saugvorrichtung 122 oder als zusätzliche Struktur auf der Abnahmewalze 120 ausgebildet sein.

Die erfindungsgemäße Abnahmevorrichtung wird vorzugsweise bei Schneidanlagen zur Airbagproduktion eingesetzt. Hier wird insbesondere der Vorteil erreicht, dass die teilweise sehr großen und mit komplexen Konturen versehenen Gewebematerialteile 20 sehr vorsichtig weitertransportiert werden müssen. Durch das erfindungsgemäße Aufwickeln der Gewebematerialteile 20 lässt sich viel Platz für den Transport sparen. Außerdem werden die aufgewickelten Gewebematerialteile 20 in den Transportbehältern auch gut geschützt.

## Patentansprüche

1. Abnahmevorrichtung (100) zur Abnahme von wenigstens einem biegeschlaffen Materialteil (20) von einer Fördereinrichtung (30), umfassend:
wenigstens eine Aufwickelvorrichtung (110) mit einem Aufnehmer (120), der zu einer Abnahmeposition (A) über der Fördereinrichtung (30) verfahrbar ist und eingerichtet ist, einen Bereich eines abzunehmenden Materialteils (20) zu kontaktieren und das abzunehmende Materialteil (20) von der Fördereinrichtung (30) aufzunehmen und um den Aufnehmer (120) aufzuwickeln,
wobei die Aufwickelvorrichtung (110) oder der Aufnehmer (120) nach einem Aufwickeln des abzunehmenden Materialteils (20) in ihrer/seiner Ausrichtung verschwenkbar ist und zu einer Ablageposition (B) verfahrbar ist,
**dadurch gekennzeichnet, dass**
die Aufwickelvorrichtung (110) eingerichtet ist, das um den Aufnehmer (120) gewickelte Materialteil (20) zu einem Transportbehälter (151) an der Ablageposition (B) zu befördern und das aufgewickelte Materialteil (20) in einem aufgewickelten Zustand abzulegen.

2. Abnahmevorrichtung (100) nach Anspruch 1, wobei mehrere Aufwickelvorrichtungen (110) angeordnet sind und jede Aufwickelvorrichtung (110) einem Bereich der Fördereinrichtung (30) zugeordnet ist und/oder die eine oder mehreren Aufwickelvorrichtungen (110) separat in der Höhe zur Fördereinrichtung (30) und von einer Abnahmeposition (A) zu einer Ablageposition (B) beweglich sind.

3. Abnahmevorrichtung (100) nach einem der Ansprüche 1 oder 2, wobei der Aufnehmer (120) eine Greifeinrichtung und/oder eine Saugvorrichtung (122) umfasst, um ein auf der Fördereinrichtung (30) ankommendes Materialteil (20) an einer Oberfläche (124) des Aufnehmers (120) anzuhaften.

4. Abnahmevorrichtung (100) nach einem der Ansprüche 1 bis 3, wobei der Aufnehmer (120) drehbar an der Aufwickelvorrichtung (110) angelenkt ist, um nach einem Anhaften des aufzunehmenden Materialteils (20) eine Drehbewegung um die Längsachse auszuführen, um das Materialteil (20) um den Aufnehmer (120) herum aufzuwickeln.

5. Abnahmevorrichtung (100) nach Anspruch 3 oder 4, wobei die Saugvorrichtung (122) eine oder mehrere Öffnungen (123) aufweist, die an der Oberfläche (124) des Aufnehmers (120) angeordnet sind, wobei die eine oder mehreren Öffnungen (123) vorzugsweise als Fugen (1211) oder Reihen von Öffnungen (123) an der Oberfläche (124) des Aufnehmers (120) verteilt sind; und/oder
wobei die eine oder mehrere Öffnungen (123) mit Unterdruck oder Überdruck beaufschlagt werden können, um ein ankommendes Materialteil (20) an der Oberfläche des Aufnehmers (120) anzuhaften oder es von dieser zu lösen.

6. Abnahmevorrichtung (100) nach einem der Ansprüche 3 bis 5, wobei die Greifvorrichtung (121) einen Spalt (121a) zwischen der Oberfläche (124) des Aufnehmers (120) und der Greifvorrichtung (121) bildet, in den ein auf der Fördereinrichtung (30) ankommendes Materialteil (20) einführbar ist und/oder wobei die Greifvorrichtung (121) eine Öffnung (1212) des Spalts (121a) nach einem Einführen eines Materialteils (20) verkleinern kann, um ein Festklemmen des Materialteils (20) an dem Aufnehmer (120) zu bewirken oder wobei der Aufnehmer (120) nach einem Einführen eines Materialteils (20) in den Spalt (121a) eine Drehbewegung um die Längsachse ausführt, um das Materialteil (20) um und auf den Aufnehmer (120) aufzuwickeln.

7. Abnahmevorrichtung (100) nach einem der Ansprüche 1 bis 6, wobei die Aufwickelvorrichtung (110) eine Klemmvorrichtung (170) aufweist, die das aufgewickelte Materialteil (20a) am Aufnehmer (120) befestigt;
wobei vorzugsweise die Klemmvorrichtung (170) am Aufnehmer oder an einer Halterung des Aufnehmers (120) befestigt ist und nach einem Aufwickelvorgang in Richtung Aufnehmer (120) bewegbar ist, um das aufgewickelte Materialteil (20) an dem Aufnehmer (120) festzulegen und bei einem Ablagevorgang von dem Aufnehmer (120) mit dem aufgewickelten Materialteil (20) hinwegbewegbar ist, um das aufgewickelte Materialteil (20) freizugeben.

8. Abnahmevorrichtung (100) nach einem der Ansprüche 1 bis 7, wobei eine Rotationsachse des Aufnehmers (120) im Bereich der Abnahmeposition A des Materialteils (20) von der Fördereinrichtung (30) im Wesentlichen horizontal und quer zu einer Förderrichtung (F) der Fördereinrichtung (30) ausgerichtet ist und/oder im Bereich der Ablageposition (B) horizontal, geneigt oder vertikal ausgerichtet ist.

9. Abnahmevorrichtung (100) nach einem der Ansprüche 1 bis 8, wobei der Aufnehmer (120) nach einem Anhaften des Materialteils (20) an dem Aufnehmer (120) von einer Förderebene nach oben verfahrbar ist, wobei der Aufwickelvorgang des Aufnehmers (120) in einem vorbestimmten Abstand zur Förderebene stattfindet; und/oder wobei der Aufnehmer (120) als Abnahmewalze (120) ausgebildet ist.

10. Abnahmevorrichtung (100) nach einem der Ansprüche 1 bis 9, wobei die Aufwickelvorrichtung (110) wenigstens ein Gelenk (141, 142, 143, 144) aufweist, welches ein Positionieren und Verschwenken des Aufnehmers (120) ermöglicht und/oder die Aufwickelvorrichtung (110) in ihre Höhe verstellbar ist, um von der Förderebene oder von der Abnahmeposition A angehoben zu werden und nach einem Verschwenken auf die Höhe eines Transportbehälters (151) oder einer Ablageposition (B) verfahrbar ist.

11. Abnahmesystem mit einer Abnahmevorrichtung (100) nach einem der Ansprüche 1-10, weiter umfassend mindestens einen Transportbehälter (151), der wenigstens ein aufgewickeltes Materialteil (20a) aufnehmen kann und der im Bereich der Ablageposition (B) positioniert ist, um das aufgewickelte Gewebematerialteil (20a) vom Aufnehmer (120) aufzunehmen.

12. Abnahmesystem nach Anspruch 11, wobei der Transportbehälter (151) eine Partitionierungsstruktur (153) aufweist, um in durch die Partitionierungsstruktur (153) gebildeten Ablagebereichen (152) jeweils ein aufgewickeltes Materialteil (20a) aufzunehmen; und/oder wobei der Transportbehälter (151) mehrere Ablagebereiche (152) aufweist, wobei jeder Ablagebereich (152) eine Tiefe aufweist, die größer als der Durchmesser oder die Weite des Ablagebereichs (152) ist und/oder wobei die Tiefe des Ablagebereichs (152) wenigstens 50% der Breite eines Materialteils (20) entspricht; und/oder
wobei die Anlageposition (B) rechts und/oder links bzw. seitlich zur Fördereinrichtung (30) angeordnet ist, und/oder weiter umfassend ein Förderband (154) auf dem ein oder mehrere Transportbehälter (151) zur Ablageposition (B) transportierbar sind und nach einem Befüllen mit einem oder mehreren aufgewickelten Gewebematerialteilen (20a) von der Ablageposition (B) hinweg transportierbar sind, vorzugsweise verläuft die Förderrichtung (F) des Förderbandes (154) im Bereich der Ablageposition (B) quer zur Förderrichtung (F) der Fördereinrichtung (30).

13. System (1000) zum Abtransportieren von Gewebematerialteilen (20) umfassend:
eine Fördereinrichtung (30) mit einer horizontal angeordneten Förderebene, auf der wenigstens ein Gewebematerialteil (20) gefördert wird;
eine Abnahmevorrichtung (100) nach einem der vorhergehenden Ansprüche 1 bis 10.

14. Anlage (2000) zum Schneiden und Transportieren von Gewebematerialteilen (20) umfassend: ein Abnahmesystem nach einem der Ansprüche 11, 12 oder einem System (1000) zum Abtransportieren von Gewebematerialteilen nach Anspruch 13 und eine Bearbeitungseinheit (200) zum Schneiden von Materialteilen (20) aus einer Materialbahn, die auf der Fördereinrichtung (30) aufliegt.

15. Verfahren zum Abnehmen eines Materialteils (20), das auf einer Fördereinrichtung (30) aufliegt, umfassend die Schritte:
Anhaften (S10) wenigstens eines Materialteils (20) im Bereich einer Abnahmeposition (A) an einem drehbaren Aufnehmer (120) einer Abnahmevorrichtung gemäss Anspruch 1 (100);
Aufwickeln (S20) des angehafteten Materialteils (20) auf den Aufnehmer (120) durch eine Drehbewegung des Aufnehmers (120);
Bewegen (S30) des Aufnehmers (120) mit dem aufgewickelten Materialteil (20a) zu einer Ablageposition (B);
Ablegen (S40) des aufgewickelten Materialteils (20a) im aufgewickelten Zustand in einem Transportbehälter (151) an der Ablageposition (B).

## Claims

1. A removal device (100) for removing at least one pliable material part (20) from a conveyor device (30), comprising:
at least one winding device (110) including a receiver (120) which can be moved to a removal position (A) above the conveyor device (30) and is configured to contact a region of a material part (20) to be removed and to receive the material part (20) to be removed from the conveyor device (30) and to wind it up around the receiver (120),
wherein the winding device (110) or the receiver (120) is pivotable in its orientation after the material part (20) to be removed has been wound up and is movable to a depositing position (B),
**characterized in that** the winding device (110) is configured to convey the material part (20) wound around the receiver (120) to a transport container (151) at the depositing position (B) and to deposit the wound-up material part (20) in a wound-up state.

2. The removal device (100) according to claim 1, wherein a plurality of winding devices (110) is arranged and each winding device (110) is assigned to a region of the conveyor device (30) and/or the one or more winding devices (110) are movable separately at the level of the conveyor device (30) and from a receiver position (A) to a depositing position (B).

3. The removal device (100) according to one of claims 1 or 2, wherein the receiver (120) comprises a gripping device and/or a suction device (122) in order to adhere a material part (20) incoming on the conveyor device (30) to a surface (124) of the receiver (120).

4. The removal device (100) according to one of claims 1 to 3, wherein the receiver (120) is rotatably hinged on the winding device (110) in order to carry out a rotational movement about the longitudinal axis after the material part (20) to be received has adhered in order to wind up the material part (20) around the receiver (120).

5. The removal device (100) according to claim 3 or 4, wherein the suction device (122) has one or more openings (123) arranged on the surface (124) of the receiver (120), wherein the one or more openings (123) are preferably distributed as grooves (1211) or rows of openings (123) on the surface (124) of the receiver (120); and or
wherein the one or more openings (123) can be subjected to negative pressure or positive pressure to adhere or detach an incoming material part (20) to/from the surface of the receiver (120).

6. The removal device (100) according to one of claims 3 to 5, wherein the gripping device (121) forms a gap (121a) between the surface (124) of the receiver (120) and the gripping device (121), into which gap a material part (20) incoming on the conveyor device (30) can be inserted and/or wherein the gripping device (121) can reduce an opening (1212) of the gap (121a) after a material part (20) has been inserted in order to effect a clamping of the material part (20) to the receiver (120) or wherein the receiver (120) performs a rotational movement about the longitudinal axis after a material part (20) has been inserted into the gap (121a) in order to wind up the material part (20) around and onto the receiver (120).

7. The removal device (100) according to one of claims 1 to 6, wherein the winding device (110) includes a clamping device (170) which fastens the wound-up material part (20a) to the receiver (120);
preferably wherein the clamping device (170) is attached to the receiver or to a holder of the receiver (120) and is movable toward the receiver (120) after a winding process in order to fix the wound-up material part (20) to the receiver (120) and is movable away from the receiver (120) with the wound-up material part (20) during a depositing process in order to release the wound-up material part (20).

8. The removal device (100) according to one of claims 1 to 7, wherein an axis of rotation of the receiver (120) in the area of removal position A of the material part (20) from the conveyor device (30) is oriented substantially horizontally and transversely to a conveying direction (F) of the conveyor device (30) and/or is oriented horizontally, inclined or vertically in the depositing position (B).

9. The removal device (100) according to one of claims 1 to 8, wherein the receiver (120) is movable upwards from a conveying plane after the material part (20) has adhered to the receiver (120), the winding process of the receiver (120) taking place at a predetermined distance from the conveying plane; and/or wherein the receiver (120) is configured as a removal roller (120).

10. The removal device (100) according to one of claims 1 to 9, wherein the winding device (110) includes at least one joint (141, 142, 143, 144) which allows for the receiver (120) to be positioned and pivoted and/or the winding device (110) is adjustable in height in order to be raised from the conveying plane or from the removal position A and, after pivoting, is movable to the level of a transport container (151) or a depositing position (B).

11. A removal system including a removal device (100) according to one of claims 1 to 10, further comprising at least one transport container (151) which can receive at least one wound-up material part (20a) and is positioned in the area of the depositing position (B) in order to receive the wound-up fabric material part (20a) from the receiver (120).

12. The removal system according to claim 11, wherein the transport container (151) has a partitioning structure (153) in order to receive one wound-up material part (20a) each, in depositing regions (152) formed by the partitioning structure (153); and/or wherein the transport container (151) has a plurality of depositing regions (152), each depositing region (152) having a depth greater than the diameter or the width of the depositing region (152) and/or wherein the depth of the depositing region (152) corresponds to at least 50% of the width of a material part (20); and/or wherein the removal position (B) is arranged to the right and/or left or to the side of the conveyor device (30), and/or further comprising a conveyor belt (154) on which one or more transport containers (151) can be transported to the depositing position (B) and, after being filled with one or more wound-up fabric material parts (20a), can be transported away from the depositing position (B), wherein the conveying direction (F) of the conveyor belt (154) preferably runs transversely to the conveying direction (F) of the conveying device (30) in the region of the depositing position (B).

13. A system (1000) for transporting away fabric material parts (20), comprising:
a conveyor device (30) with a horizontally arranged conveying plane on which at least one fabric material part (20) is conveyed;
a removal device (100) according to one of the preceding claims 1 to 10.

14. A facility (2000) for cutting and transporting fabric material parts (20), comprising: a removal system according to one of claims 11, 12 or a system (1000) for transporting away fabric material parts (20) according to claim 13 and a processing unit (200) for cutting material parts (20) from a material web which rests on the conveyor device (30).

15. A method for removing a material part (20) which rests on a conveyor device (30), comprising the steps of:
adhering (S10) at least one material part (20) in the region of a removal position (A) to a rotatable receiver (120) of a removal device according to claim 1 (100);
winding (S20) the adhered material piece (20) onto the receiver (120) by rotating the receiver (120);
moving (S30) the receiver (120) with the wound-up material part (20a) to a depositing position (B);
depositing (S40) the wound-up material part (20a) in the wound-up state in a transport container (151) at the depositing position (B).

## Revendications

1. Dispositif de retrait (100) destiné à retirer au moins une partie de matière souple (20) d'un dispositif de convoyage (30), comprenant :
au moins un dispositif d'enroulement (110) comportant un récepteur (120) qui peut être déplacé jusqu'à une position de retrait (A) au-dessus du dispositif de convoyage (30) et qui est conçu pour venir en contact avec une zone d'une partie de matière à retirer (20) et pour recevoir la partie de matière à retirer (20) du dispositif de convoyage (30) et pour l'enrouler autour du récepteur (120),
dans lequel le dispositif d'enroulement (110) ou le récepteur (120) peut pivoter dans son orientation après un enroulement de la partie de matière à retirer (20) et peut être déplacé jusqu'à une position de dépose (B),
**caractérisé en ce que** le dispositif d'enroulement (110) est conçu pour acheminer la partie de matière (20) enroulée autour du récepteur (120) jusqu'à un contenant de transport (151) dans la position de dépose (B) et pour déposer la partie de matière (20) enroulée dans un état enroulé.

2. Dispositif de retrait (100) selon la revendication 1, dans lequel plusieurs dispositifs d'enroulement (110) sont agencés et chaque dispositif d'enroulement (110) est associé à une zone du dispositif de convoyage (30) et/ou le ou les dispositifs d'enroulement (110) sont séparément mobiles sur la hauteur du dispositif de convoyage (30) et d'une position de réception (A) à une position de dépose (B).

3. Dispositif de retrait (100) selon l'une des revendications 1 ou 2, dans lequel le récepteur (120) comprend un dispositif de préhension et/ou un dispositif d'aspiration (122) pour faire adhérer une partie de matière (20) arrivant sur le dispositif de convoyage (30) à une surface (124) du récepteur (120).

4. Dispositif de retrait (100) selon l'une des revendications 1 à 3, dans lequel le récepteur (120) est articulé de manière rotative sur le dispositif d'enroulement (110) afin d'effectuer un mouvement de rotation autour de l'axe longitudinal après que la partie de matière à retirer (20) a adhéré afin d'enrouler la partie de matière (20) autour du récepteur (120).

5. Dispositif de retrait (100) selon la revendication 3 ou 4, dans lequel le dispositif d'aspiration (122) comporte une ou plusieurs ouvertures (123) qui sont agencées sur la surface (124) du récepteur (120), dans lequel la ou les ouvertures (123) sont de préférence réparties sous forme d'interstices (1211) ou de rangées d'ouvertures (123) sur la surface (124) du récepteur (120) ; et/ou
dans lequel l'ouverture ou les ouvertures (123) peuvent être soumises à une pression négative ou à une pression positive afin de faire adhérer une partie de matière entrante (20) à la surface du récepteur (120) ou de la détacher de celle-ci.

6. Dispositif de retrait (100) selon l'une des revendications 3 à 5, dans lequel le dispositif de préhension (121) forme une fente (121a) entre la surface (124) du récepteur (120) et le dispositif de préhension (121), dans laquelle une partie de matière (120) arrivant sur le dispositif de convoyage (30) peut être insérée et/ou dans lequel le dispositif de préhension (121) peut réduire une ouverture (1212) de la fente (121a) après une insertion d'une partie de matière (20) afin d'entraîner un serrage de la partie de matière (20) sur le récepteur (120), ou dans lequel le récepteur (120) réalise un mouvement de rotation autour de l'axe longitudinal après une insertion d'une partie de matière (20) dans la fente (121a), afin d'enrouler la partie de matière (20) autour du récepteur (120) et sur celui-ci.

7. Dispositif de retrait (100) selon l'une des revendications 1 à 6, dans lequel le dispositif d'enroulement (110) comporte un dispositif de serrage (170) qui fixe la partie de matière enroulée (20a) sur le récepteur (120) ;
dans lequel le dispositif de serrage (170) est de préférence fixé sur le récepteur ou sur un support du récepteur (120) et peut être déplacé en direction du récepteur (120) après un processus d'enroulement afin de fixer la partie de matière enroulée (20) sur le récepteur (120) et peut être éloigné du récepteur (120) avec la partie de matière enroulée (20) lors d'un processus de dépose afin de libérer la partie de matière enroulée (20).

8. Dispositif de retrait (100) selon l'une des revendications 1 à 7, dans lequel un axe de rotation du récepteur (120) dans la zone de la position de retrait (A) de la partie de matière (20) provenant du dispositif de convoyage (30) est orienté de manière sensiblement horizontale et transversalement à une direction de transport (F) du dispositif de convoyage (30) et/ou est orienté de manière horizontale, inclinée ou verticale dans la zone de la position de dépose (B).

9. Dispositif de retrait (100) selon l'une des revendications 1 à 8, dans lequel le récepteur (120) peut être déplacé vers le haut à partir d'un plan de transport après que la partie de matière (20) a adhéré au récepteur (120), dans lequel le processus d'enroulement du récepteur (120) a lieu à une distance prédéterminée du plan de transport ; et/ou dans lequel le récepteur (120) est réalisé sous la forme d'un cylindre de retrait (120).

10. Dispositif de retrait (100) selon l'une des revendications 1 à 9, dans lequel le dispositif d'enroulement (110) comporte au moins une articulation (141, 142, 143, 144) qui permet un positionnement et un pivotement du récepteur (120) et/ou le dispositif d'enroulement (110) est réglable en hauteur afin d'être soulevé à partir du plan de transport ou de la position de retrait (A) et peut être déplacé après un pivotement à la hauteur d'un contenant de transport (151) ou d'une position de dépose (B).

11. Système de retrait comportant un dispositif de retrait (100) selon l'une des revendications 1 à 10, comprenant en outre au moins un contenant de transport (151) qui peut recevoir au moins une partie de matière enroulée (20a) et qui est positionné dans la zone de la position de dépose (B) afin de recevoir la partie de matière de tissu enroulée (20a) du récepteur (120).

12. Système de retrait selon la revendication 11, dans lequel le contenant de transport (151) comporte une structure de séparation (153) afin de recevoir respectivement une partie de matière enroulée (20a) dans des zones de dépose (152) formées par la structure de séparation (152) ; et/ou dans lequel le contenant de transport (151) comporte plusieurs zones de dépose (152), dans lequel chaque zone de dépose (152) a une profondeur qui est supérieure au diamètre ou à la largeur de la zone de dépose (152) et/ou dans lequel la profondeur de la zone de dépose (152) correspond à au moins 50 % de la largeur d'une partie de matière (20) ; et/ou
dans lequel la position de dépose (B) est agencée à droite et/ou à gauche ou sur le côté du dispositif de convoyage (30) et/ou comprenant en outre une bande de convoyage (154) sur laquelle un ou plusieurs contenants de transport (151) peuvent être transportés jusqu'à la position de dépose (B) et après un remplissage avec une ou plusieurs parties de matière de tissu enroulées (20a), peuvent être transportés en l'éloignant de la position de dépose (B), la direction de transport (F) de la bande transporteuse (154) s'étendant de préférence dans la zone de la position de dépose (30) transversalement à la direction de transport (F) du dispositif de convoyage (30).

13. Système (1000) pour évacuer par transport des parties de matière de tissu (20), comprenant :
un dispositif de convoyage (30) ayant un plan de transport agencé horizontalement, sur lequel au moins une partie de matière de tissu (20) est acheminée ;
un dispositif de retrait (100) selon l'une des revendications 1 à 10 précédentes.

14. Installation (2000) de découpe et de transport de parties de matière de tissu (20) comprenant : un système de retrait selon l'une des revendications 11, 12 ou un système (1000) pour évacuer par transport des parties de matière de tissu selon la revendication 13 et une unité de traitement (200) pour couper des parties de matière (20) à partir d'un voile de matière qui repose sur le dispositif de convoyage (30).

15. Procédé pour retirer une partie de matière (20) qui repose sur un dispositif de convoyage (30), comprenant les étapes consistant à :
faire adhérer (S 10) au moins une partie de matière (20) dans la zone d'une position de retrait (A) sur un récepteur rotatif (120) d'un dispositif de retrait (100) selon la revendication 1 ;
enrouler (S20) la partie de matière adhérente (20) sur le récepteur (120) par un mouvement de rotation du récepteur (120) ;
déplacer (S30) le récepteur (120) avec la partie de matière enroulée (20a) jusqu'à une position de dépose (B) ;
déposer (S40) la partie de matière enroulée (20a) dans un état enroulé dans un contenant de transport (151) dans la position de dépose (B).
